# EUROPEAN PATENT APPLICATION

(11) **EP 4 498 120 A1**
(43) Date of publication of application: **29.01.2025**
(21) Application number: 22937833.6
(22) Date of filing: 20.04.2022
(51) Int. Cl.: G01S 7/484

(54) **DETECTION APPARATUS AND TERMINAL DEVICE**

(71) Applicant: Shenzhen Yinwang Intelligent Technologies Co., Ltd., Shenzhen, Guangdong 518129 (CN)
(72) Inventor: LIU, Jun, Shenzhen, Guangdong 518129 (CN); LONG, Yaxue, Shenzhen, Guangdong 518129 (CN)
(74) Representative: Pfenning, Meinig & Partner mbB
(86) International application number: PCT/CN2022/088026
(87) International publication number: WO 2023/201596

(57) **Abstract**

A detection apparatus and a terminal device are provided, and may be used in the field of autonomous driving, intelligent driving, or the like. The detection apparatus includes a light source module configured to emit a first light beam, and an optical shaping module including M first regions that are configured to converge or diverge the received first light beam to obtain M second light beams. At least two first regions in the M first regions have different capabilities of converging or diverging the first light beam, and a light spot formed by the M second light beams includes at least two regions with different intensities, where an irradiation (or detection) distance of a second light beam corresponding to a formed region with a higher intensity is longer than an irradiation (or detection) distance of a second light beam corresponding to a formed region with a lower intensity. In addition, because the M first regions have a same coefficient of thermal expansion and also have a same degree of changing an effect of converging or diverging the passed first light beam, thermal stability is also relatively high based on the light spot formed by the second light beams.

## Description

### TECHNICAL FIELD

This application relates to the field of detection technologies, and in particular, to a detection apparatus and a terminal device.

### BACKGROUND

With development of science and technology, intelligent terminals such as intelligent transportation devices, smart home devices, robots, and vehicles are gradually entering people's daily life. Because a detection apparatus can sense a surrounding environment, then can recognize and track a moving target and recognize a static target like a lane line or a signboard based on sensed surrounding information, and can perform path planning and the like with reference to a navigator, map data, and the like, the detection apparatus plays an increasingly important role in the intelligent terminal.

For example, the detection apparatus is a lidar, and the intelligent terminal is a vehicle. The lidar installed on the vehicle may be referred to as a vehicle-mounted lidar. However, in an actual application scenario, usually, a light beam in a central field of view (where a field of view includes a vertical field of view and a horizontal field of view) of the vehicle-mounted lidar is used to irradiate the front of the traveling vehicle, and there is a higher application requirement on target sensing and ranging. An edge field of view of the vehicle-mounted lidar has a lower requirement on target sensing, ranging, and the like. For example, a part of an edge field of view in a vertical field of view of the vehicle-mounted lidar irradiates the road, and a part of the edge field of view irradiates the sky. However, currently, a light beam emitted by the vehicle-mounted lidar evenly irradiates a detection region. This cannot meet the requirement of the central field of view, and causes a waste of a part of the light beam.

In conclusion, how to meet an application requirement of a detection apparatus and improve utilization of a light beam is an urgent technical problem to be resolved currently.

### SUMMARY

This application provides a detection apparatus and a terminal device, to improve utilization of an emitted light beam and meet a requirement of a central field of view of the detection apparatus.

According to a first aspect, this application provides a detection apparatus. The detection apparatus includes a light source module and an optical shaping module. The optical shaping module includes M first regions, and M is an integer greater than 1. The light source module is configured to emit a first light beam; and the M first regions of the optical shaping module are configured to converge or diverge (which may be represented as converge/diverge) (or refract) the received first light beam, to obtain M second light beams, at least two first regions in the M first regions have different capabilities of converging or diverging the light beam, and a light spot formed by the M second light beams includes at least two regions with different intensities.

Based on the foregoing solution, by using the optical shaping module, the light spot formed by the M second light beams may include the at least two regions with different intensities. In the at least two regions with different intensities, an irradiation (or detection) distance of a second light beam corresponding to a formed region with a higher intensity is longer than an irradiation (or detection) distance of a second light beam corresponding to a formed region with a lower intensity. Further, because the M first regions of the same optical shaping module have a same coefficient of thermal expansion (coefficient of thermal expansion, CTE), and also have a same degree of changing a capability of converging or diverging the passed first light beam when a temperature of the optical shaping module changes, a divergence angle of the second light beam is not changed when the temperature of the optical shaping module changes. In view of this, thermal stability is also relatively high based on an intensity (or energy density) of the light spot formed by the M second light beams.

In a possible implementation, the light spot formed by the M second light beams includes a second region and a third region that have different intensities, an intensity (or energy density) of the second region is greater than an intensity (or energy density) of the third region, the second region corresponds to a region of interest of the detection apparatus, and the third region corresponds to a non-region of interest of the detection apparatus.

That the intensity of the second region in the light spot formed by the M second light beams is greater than the intensity of the third region may also be understood as: In a propagation direction (which may be referred to as a second direction) vertical to the second light beam, an intensity of a part that is of the M second light beams and that corresponds to a region of interest of the detection apparatus is greater than an intensity of a part that is of the M second light beams and that corresponds to a non-region of interest of the detection apparatus. In a propagation direction (which may be referred to as a first direction) of the second light beam, a detection (or illumination) distance of the part that is of the M second light beams and that corresponds to the region of interest of the detection apparatus is longer than a detection (or illumination) distance of the part that is of the M second light beams and that corresponds to the non-region of interest of the detection apparatus. In other words, a spatial energy density of the part that is of the M second light beams and that corresponds to the region of interest is greater than a spatial energy density of the part that is of the M second light beams and that corresponds to the non-region of interest.

It is designed that in the light spot formed by the M second light beams, the intensity of the second region corresponding to the region of interest of the detection apparatus is greater than the intensity of the third region corresponding to the non-region of interest. This helps improve energy utilization of the first light beam emitted by the light source module. Moreover, because the intensity of the second region in the light spot formed by the M second light beams is greater than the intensity of the third region, an irradiation (or detection) distance of a second light beam forming the second region in the light spot may be longer than that of a second light beam forming the third region in the light spot.

In a possible implementation, the region of interest may be a region corresponding to a central field of view of the detection apparatus, and the non-region of interest may be a region corresponding to a field of view other than the central field of view in a full field of view range of the detection apparatus.

By setting the region of interest as the region corresponding to the central field of view of the detection apparatus, a second light beam of the central field of view of the detection apparatus can detect (or illuminate) a relatively long distance. This can meet a requirement of the central field of view of the detection apparatus.

Further, optionally, the non-region of interest is a region corresponding to an edge field of view of the detection apparatus.

By setting the non-region of interest as the region corresponding to the edge field of view of the detection apparatus, impact on a detection range of the detection apparatus can be reduced as much as possible. This can ensure normal application of the detection apparatus, and can also improve and utilization of the second light beam.

In a possible implementation, the optical shaping module includes a lens array, the lens array forms (that is, is divided into) the M first regions, and each first region includes at least one lens; and lenses included in the at least two first regions that have different capabilities of converging or diverging the first light beam have different focal powers.

By designing that the lenses included in the at least two first regions that have different capabilities of converging or diverging the first light beam have different focal powers, it may be implemented that the intensity (or energy density) of the second region in the light spot formed by the M second light beams obtained through convergence or divergence of the optical shaping module is greater than the intensity (or energy density) of the third region.

Further, a plurality of lenses included in any one of the M first regions have a same focal power. In other words, a plurality of lenses included in at least one first region in the M first regions have a same focal power.

The plurality of lenses in the same first region is set to have the same focal power, which helps reduce complexity of a structure of the optical shaping module.

In a possible implementation, the lens includes a cylindrical lens (or referred to as a cylindrical mirror) or a spherical lens.

The lens included in the first region is the cylindrical lens or the spherical lens, which can change a divergence angle of a passed first light beam.

In a possible implementation, a focal power of a lens included in a first region corresponding to the region of interest is less than a focal power of a lens included in a first region corresponding to the non-region of interest.

By setting the focal power of the lens included in the first region corresponding to the region of interest to be less than the focal power of the lens included in the first region corresponding to the non-region of interest, a capability of converging or diverging the first light beam that passes through the first region corresponding to the region of interest of the detection apparatus may be smaller, and a capability of converging or diverging the first light beam that passes through the first region corresponding to the non-region of interest of the detection apparatus may be larger. This can increase an energy density of the second light beam corresponding to the region of interest.

In a possible implementation, a light spot formed by one second light beam is stepped. The light spot formed by the M second light beams may be in a " 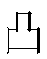 (a Chinese character that means convex)" shape or a " 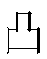 "-like shape.

Based on the light spot in the " 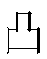 (a Chinese character that means convex)" shape or the " 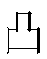 "-like shape, a protrusion part can implement detection (or illumination) at a relatively long distance. This can meet the requirement of the central field of view of the detection apparatus. Moreover, the " 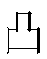 (a Chinese character that means convex)" shape or the " 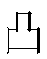 "-like shape of the light spot is not affected by the temperature.

In a possible implementation, two adjacent second light beams in the M second light beams partially overlap.

The two adjacent second light beams in the M second light beams partially overlap, to avoid that a target in the detection region cannot be continuously detected, that is, avoid that the detection apparatus detects central part missing of a signal (or referred to as signal loss).

In a possible implementation, a central region of a second light spot overlaps a first light spot, the central region of the second light spot is larger than or equal to the region of interest, and the first light spot and the second light spot are light spots formed by different second light beams in the M second light beams.

The central region of the second light spot overlaps the first light spot, so that an intensity of an overlapping part may be greater than an intensity of a non-overlapping part. In other words, a second light beam corresponding to the overlapping part can detect (or illuminate) a relatively long distance. In addition, because the central region of the second light spot is larger than or equal to the region of interest, it can be implemented that the second light spot covers at least the whole region of interest.

Further, the second light spot corresponds to the full field of view range of the detection apparatus.

The second light spot corresponds to the full field of view range of the detection apparatus, so that the whole detection region can be detected.

In a possible implementation, the light source module includes N light source assemblies, one light source assembly corresponds to one first light beam, and N is a positive integer.

In a possible implementation, the N light source assemblies include a first light source assembly and a second light source assembly, namely, N = 2, and the detection apparatus further includes a reflection module. The first light source assembly is configured to emit a 1^{st} first light beam; the second light source assembly is configured to emit a 2^{nd} first light beam; and the reflection module is configured to change a propagation direction of the 2^{nd} first light beam, where a changed propagation direction of the 2^{nd} first light beam is the same as a propagation direction of the 1^{st} light beam.

The reflection module helps make full use of a space region of the detection apparatus, thereby facilitating miniaturization of a volume of the detection apparatus.

In a possible implementation, the detection apparatus further includes an optical receiving lens. The optical receiving lens is configured to receive M third light beams from the detection region, where the third light beam is an echo signal obtained after the second light beam is reflected by a target in the detection region.

By using the optical receiving lens, the third light beams from the detection region can be collected as much as possible. This helps improve utilization of the third light beams.

Further, the detection apparatus further includes a detection module configured to determine association information of the target based on the M third light beams from the optical receiving lens. The association information of the target may include but is not limited to distance information of the target, an orientation of the target, a speed of the target, and/or grayscale information of the target.

According to a second aspect, this application provides a terminal device. The terminal device includes a control apparatus and the detection apparatus according to the first aspect and any one of the possible implementations of the first aspect. The control apparatus is configured to control the detection apparatus to detect a detection region.

In a possible implementation, the terminal device may include but is not limited to a vehicle (for example, an unmanned vehicle, an intelligent vehicle, an electric vehicle, or a digital vehicle), a robot, a surveying and mapping device, an uncrewed aerial vehicle, a smart home device (for example, a robot vacuum), an intelligent manufacturing device (for example, an industrial device), an intelligent transportation device (for example, an automated guided vehicle (automated guided vehicle, AGV), an unmanned transport vehicle, or a truck), or the like.

For technical effects that can be achieved in the second aspect, refer to the descriptions of technical effects that can be achieved in the first aspect. Details are not described herein again.

### BRIEF DESCRIPTION OF DRAWINGS

FIG. 1a is a diagram of a location relationship between a detection apparatus and a vehicle according to this application;
FIG. 1b is an example of a diagram of a possible application scenario according to this application;
FIG. 2 is a diagram of a structure of a detection apparatus according to this application;
FIG. 3a is a diagram of a light spot formed by M second light beams according to this application;
FIG. 3b is a diagram of another light spot formed by M second light beams according to this application;
FIG. 4 is a diagram of a structure of a light source assembly according to this application;
FIG. 5 is a diagram of a structure of an optical shaping module according to this application;
FIG. 6a is a diagram of a propagation optical path of a first light beam according to this application;
FIG. 6b is a diagram of another light spot formed by M second light beams according to this application;
FIG. 6c is a diagram of another propagation optical path of a first light beam according to this application;
FIG. 6d is a diagram of another light spot formed by M second light beams according to this application;
FIG. 6e is a diagram of another light spot formed by M second light beams according to this application;
FIG. 6f is a diagram of another light spot formed by M second light beams according to this application;
FIG. 7 is a diagram of a structure of another optical shaping module according to this application;
FIG. 8 is a diagram of another light spot formed by M second light beams according to this application;
FIG. 9 is a diagram of a structure of a detection module according to this application;
FIG. 10a is a diagram of a structure of another detection apparatus according to this application;
FIG. 10b is a diagram of a structure of another detection apparatus according to this application;
FIG. 10c is a diagram of a structure of another detection apparatus according to this application; and
FIG. 11 is a diagram of a structure of a terminal device according to this application.

### DESCRIPTION OF EMBODIMENTS

The following describes in detail embodiments of this application with reference to the accompanying drawings.

Some terms in this application are described below. It should be noted that these explanations are for ease of understanding by a person skilled in the art, and are not intended to limit the protection scope claimed by this application.

### 1. Focal power (focal power)

The focal power is equal to a difference between an image-side light convergence degree and an object-side light convergence degree, and can represent a capability of an optical element to converge or diverge light. The focal power is usually represented by letter *ϕ*. A refraction spherical focal power is *ϕ* = (n' - n)/r = n'/p' = -n/q, where n' is an image-side refractive index, n is an object-side refractive index, r is a spherical radius, p is an image distance, and q is an object distance. Usually, the focal power is expressed as a reciprocal of an image-side focal power (approximately, a refractive index of air is 1). A unit of the focal power is diopter (D), where 1 diopter (D) = 1 m⁻¹.

### 2. Coefficient of thermal expansion (coefficient of thermal expansion, CTE)

The coefficient of thermal expansion is a physical quantity that indicates a degree of thermal expansion of a material, and is usually a relative variation in length or volume of an object of the unit length or the unit volume when a temperature increases by 1°C (centigrade).

### 3. Divergence angle

A divergence angle of a laser beam is used to measure a speed at which the beam diverges from a beam waist. The beam waist of the laser beam is a location along a propagation direction where a beam radius (used to measure a lateral expansion of the beam) has a minimum. The waist radius is the beam radius at that location. For Gaussian beams, the beam radius is usually defined as a radius corresponding to a location at 1/e² of the peak intensity.

The foregoing describes some terms used in this application, and the following describes possible application scenarios of this application.

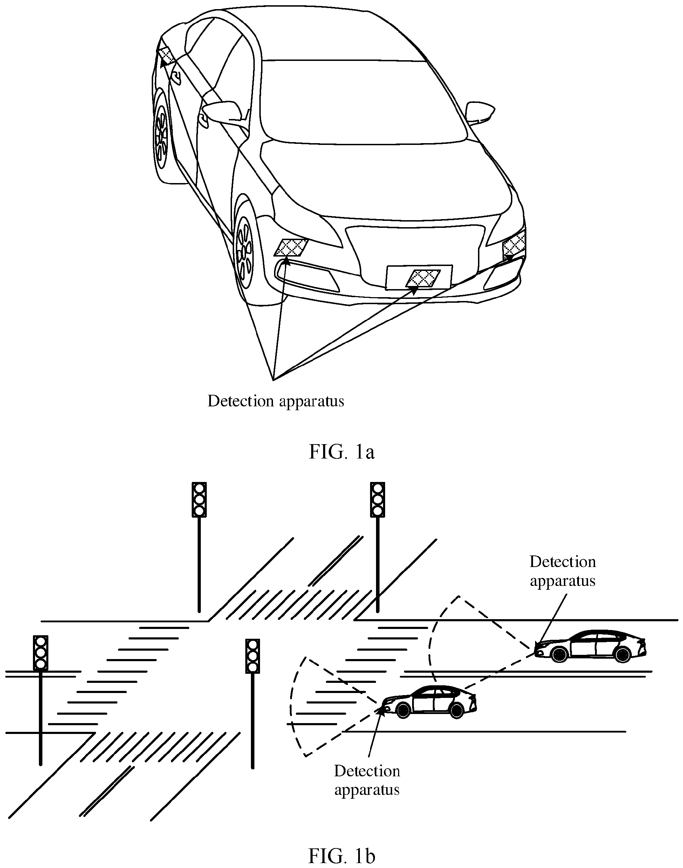

A detection apparatus in this application may be installed in a transportation means, and may be specifically installed in any location of the transportation means. For example, detection apparatuses may be installed in any one or more of four directions, namely, front, rear, left, and right directions of the transportation means, to capture information about an environment around the transportation means. Refer to FIG. 1a. For example, the transportation means is a vehicle, and the detection apparatuses are installed in six directions, namely, front, left front, right front, left rear, rear (not shown in FIG. 1a), and right rear (not shown in FIG. 1a) directions of the vehicle. Alternatively, the detection apparatuses may be installed in the vehicle, for example, installed at any location behind a windshield. For example, in FIG. 1a, a detection apparatus is installed at a central location behind the windshield.

FIG. 1b is an example of a diagram of a possible application scenario according to this application. In this application scenario, a working principle of a detection apparatus is as follows: The detection apparatus emits a light beam in a specific direction. If a target exists in a detection region (a region shown by a dashed line in FIG. 1b) of the detection apparatus, the target may reflect a received light beam back to the detection apparatus (where reflected light may be referred to as an echo signal), and the detection apparatus determines association information of the target based on the echo signal. Specifically, the detection apparatus may obtain, in real time or periodically, longitude and latitude, a speed, and an orientation of a vehicle, or association information (for example, a distance to the target, a speed of the target, and/or a posture of the target) of the target (for example, another surrounding vehicle, a pedestrian, or an obstacle) in a specific range. The detection apparatus or the vehicle may perform vehicle path planning or the like based on the obtained association information. For example, a location of the vehicle may be determined by using the longitude and latitude, or a traveling direction and destination of the vehicle in a future period of time are determined by using the speed and the orientation, or a quantity and density of obstacles around the vehicle are determined by using distances to surrounding objects. Further, optionally, assisted driving, autonomous driving, or the like of the vehicle may be implemented with reference to a function of an advanced driver assistant system (advanced driver assistant system, ADAS).

It should be understood that the foregoing application scenario is merely an example. The detection apparatus provided in this application may be further used in another possible scenario, and is not limited to the scenario in the foregoing example. For example, the detection apparatus may also be installed on an uncrewed aerial vehicle and serve as an airborne detection apparatus. For another example, the detection apparatus may also be installed on a road side unit (road side unit, RSU), and serve as a road side traffic detection apparatus, to implement intelligent vehicle-road cooperative communication and the like. For another example, the detection apparatus may also be installed on an automated guided vehicle (automated guided vehicle, AGV). The AGV is a transport vehicle that is equipped with an electromagnetic or optical automatic navigation apparatus or the like, can travel along a specified navigation path, and has security protection and various moving functions. Details are not listed herein one by one. It should be noted that the application scenarios described in this application are intended to describe the technical solutions in this application more clearly, and do not constitute a limitation on the technical solutions provided in this application. A person of ordinary skill in the art may know that with emergence of new application scenarios, the technical solutions provided in this application are also applicable to similar technical problems.

For example, the foregoing application scenarios may be applied to the field of unmanned driving, autonomous driving, assisted driving, intelligent driving, connected vehicles, security surveillance, remote interaction, medical beauty, artificial intelligence, lighting, surveying and mapping (for example, three-dimensional drawing), or the like.

As described in the background, the light beam emitted by the detection apparatus in the conventional technology may not meet the requirement, and there is a problem of low light beam utilization.

In view of this, this application provides a detection apparatus. A light beam emitted by the detection apparatus may meet the requirement and may also improve the light beam utilization in a full temperature range.

Based on the foregoing content, the following specifically describes the detection apparatus provided in this application with reference to the accompanying drawings.

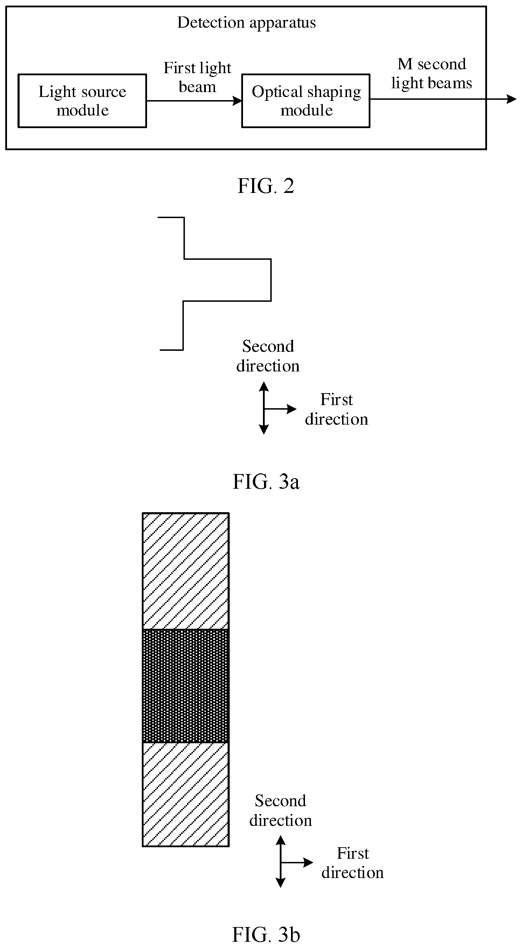

FIG. 2 is a diagram of a structure of a detection apparatus according to this application. The detection apparatus may include a light source module and an optical shaping module. The optical shaping module includes M first regions, and M is an integer greater than 1. The light source module is configured to emit a first light beam. The M first regions of the optical shaping module are configured to converge or diverge (or refract or shape) the received first light beam to obtain M second light beams. At least two first regions in the M first regions of the optical shaping module have different capabilities of converging or diverging the first light beam. It may also be understood as: After the same first light beam passes through the first regions that have different convergence or divergence capabilities and that are of the optical shaping module, divergence angles are different. Therefore, divergence angles of at least two second light beams of the M second light beams are different. A light spot formed by the M second light beams includes at least two regions with different intensities. Further, the light spot formed by the M second light beams includes a second region and a third region that have different intensities, an intensity of the second region is greater than an intensity of the third region, the second region in the light spot corresponds to a region of interest (region of interest, ROI), and the third region in the light spot corresponds to a non-region of interest.

In a first direction, an illuminable (or detectable) distance of a second light beam corresponding to the region of interest of the detection apparatus is longer than an illuminable (or detectable) distance of a second light beam corresponding to the non-region of interest of the detection apparatus. In other words, in the first direction, energy density distribution of the M second light beams is: An energy density of a part of second light beams corresponding to the region of interest of the detection apparatus is greater than an energy density of a part of second light beams corresponding to the non-region of interest of the detection apparatus. In view of this, a light spot formed by the M second light beams in the first direction may be in a " 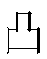 (a Chinese character that means convex)" shape or a " 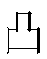 "-like shape. Refer to FIG. 3a. In a second direction, the intensity of the second region in the light spot formed by the M second light beams is greater than the intensity of the third region. For example, the light spot formed by the M second light beams is rectangular, the second region is a central region of the rectangular light spot, and the third region is a region other than the central region in the light spot. Refer to FIG. 3b. An energy density (or intensity) of the central region of the rectangular light spot is greater than that of the region other than the central region. The first direction is a direction in which the second light beams are emitted to a detection region, and the second direction is vertical to the first direction. It should be understood that a shape of the light spot formed by the M second light beams in the second direction may alternatively be a square or another regular or irregular pattern. This is not limited in this application. In addition, shapes of the second region and the third region that are in the light spot formed by the M second light beams may alternatively be other regular or irregular shapes. FIG. 3b is merely an example.

In a possible implementation, a full field of view range of the detection apparatus corresponds to at least one region of interest. A shape of the region of interest may alternatively be a square, a circle, an ellipse, another regular or irregular pattern, or the like. This is not limited in this application. The region of interest may be a region corresponding to a central field of view of the detection apparatus, and the non-region of interest may be a region other than the region of interest in the full field of view range of the detection apparatus. Further, the non-region of interest may be, for example, a region corresponding to an edge field of view of the detection apparatus. Alternatively, the region of interest is a region in which a "concerned" target (for example, a moving target and/or a static target) is located, and the non-region of interest is a region other than the region in which the "concerned" target is located in the full field of view range of the detection apparatus. It should be understood that the region of interest may alternatively be another possible region. Details are not listed herein one by one.

Based on the foregoing detection apparatus, by using the optical shaping module, the intensity of the second region corresponding to the region of interest of the detection apparatus in the light spot formed by the M second light beams may be greater than the intensity of the third region corresponding to the non-region of interest. This helps improve energy utilization of the first light beam emitted by the light source module. Moreover, because the intensity of the second region in the light spot formed by the M second light beams is greater than the intensity of the third region, an irradiation (or detection) distance of a second light beam forming the second region in the light spot may be longer than that of a second light beam forming the third region in the light spot. Further, because CTEs of the M first regions of the same optical shaping module are the same, when a temperature of the optical shaping module changes, there is a same degree of change of a capability of converging or diverging the passed first light beam. In view of this, thermal stability is also high based on the intensity (or energy density) of the light spot formed by the second light beams.

The following separately describes each functional module shown in FIG. 2, to provide an example of a specific implementation solution.

### 1. Light source module

In a possible implementation, the light source module includes at least one light source assembly. The light source assembly may be a point light source, a linear light source, or a surface light source, for example, may be specifically a vertical cavity surface emitting laser (vertical cavity surface emitting laser, VCSEL), an edge emitting laser (edge emitting laser, EEL), an all solid-state semiconductor laser (diode-pumped solid-state laser, DPSS), a fiber laser, or the like.

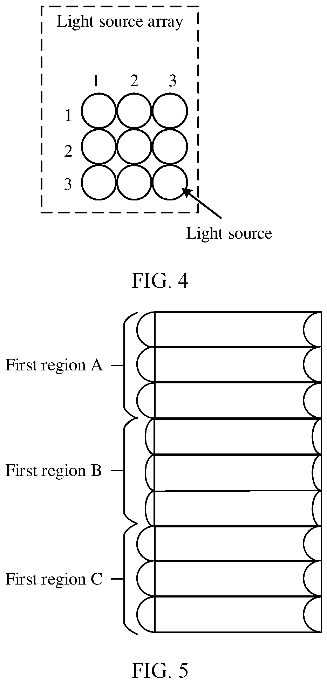

FIG. 4 is a diagram of a structure of a light source assembly according to this application. For example, the light source assembly is a light source array M×N, and M = N = 3, that is, the light source array includes 3×3 light sources. The light source array may be gated by row based on time, or may be gated by column based on time, or may be gated all at a time. Gating by row based on time means that one row in the light source array is gated at a same moment. Gating by column based on time means that one column in the light source array is gated at a same moment. For example, one row is gated at a same moment. A first row in the light source array is gated at a first moment, a second row in the light source array is gated at a second moment, and a third row in the light source array is gated at a third moment. It should be noted that the foregoing provided shape of the light source is merely an example, and may alternatively be, for example, a square, an ellipse, or another possible shape. This is not limited in this application.

It may be understood that the light source array shown in FIG. 4 is merely an example, and quantities of rows and columns included in the light source array are not specifically limited in this application. For example, the light source array may alternatively be a light source array with one row and a plurality of columns, or a light source array with a plurality of rows and one column, or another light source array with a plurality of rows and a plurality of columns. Details are not listed herein one by one.

### 2. Optical shaping module

In a possible implementation, at least two first regions in the M first regions included in the optical shaping module have different capabilities of converging or diverging the first light beam. It may also be understood as: In the M first regions, there are at least two first regions that have different capabilities of converging or diverging the first light beam. Further, the optical shaping module may include a lens array. The lens array may include one column of lenses, or may include a plurality of columns of lenses. This is not limited in this application. The lens array may form (or be divided into) M first regions, and each first region includes at least one lens. Lenses included in first regions that have different capabilities of converging or diverging the first light beam have different focal powers. It may also be understood as: Lenses included in the at least two first regions in the M first regions have different focal powers, and the lenses with different focal powers have different capabilities of diverging or converging the first light beam. In other words, second light beams obtained after the same first light beam passes through the lenses with different focal powers have different divergence angles.

In a possible implementation, the lenses included in the at least two first regions in the M first regions have different focal powers, and a plurality of lenses that belong to a same first region in the M first regions have a same focal power. Further, a focal power of a lens included in a first region corresponding to the region of interest is less than a focal power of a lens included in a first region corresponding to the non-region of interest. For example, the lens array forms two first regions, namely, a first region 11 and a first region 12. The first region 11 includes a lens 111, a lens 112, and a lens 113, and the second region 12 includes a lens 121 and a lens 122. Focal powers of the lens 111, the lens 112, and the lens 113 are the same (all are ψ 111), and focal powers of the lens 121 and the lens 122 are the same (all are ψ 121). Further, ψ 111 is different from ψ 121. If the first region 11 corresponds to the region of interest, and the first region 12 corresponds to the non-region of interest, ψ 111 is less than ψ 121.

In another possible implementation, the lenses included in the at least two first regions in the M first regions have different focal powers, and a plurality of lenses that belong to a same first region in the M first regions have different focal powers (which may be that any two lenses have different focal powers, or there are at least two lenses with different focal powers in a same first region). Further, a maximum focal power of a lens included in a first region corresponding to the region of interest is less than a minimum focal power of a lens included in a first region corresponding to the non-region of interest. For example, the lens array forms two first regions, namely, a first region 21 and a first region 22. The first region 21 includes a lens 211, a lens 212, and a lens 213, and the second region 22 includes a lens 221 and a lens 222. The lens 211, the lens 212, and the lens 213 have different focal powers (ψ 211, ψ 212, and ψ 212, respectively), and the lens 221 and the lens 222 have different focal powers (ψ 221 and ψ 222, respectively). If the first region 21 corresponds to the region of interest, and the first region 22 corresponds to the non-region of interest, a maximum value in ψ 211, ψ 212, and ψ 212 is less than a minimum value in ψ 221 and ψ 222.

It should be noted that focal powers of the plurality of lenses that belong to the same first region in the M first regions may be partially the same and partially different. Further, it may be further satisfied that a maximum focal power of a lens included in the first region corresponding to the region of interest is less than a minimum focal power of a lens included in the first region corresponding to the non-region of interest.

For example, a material of the lens may be an optical material like glass, resin, or crystal. When the material of the lens is resin, mass of the detection apparatus can be reduced. When the material of the lens is glass, this helps improve imaging quality of the detection apparatus.

For example, the lens included in the lens array may be a spherical lens, or may be an aspheric lens, for example, a cylindrical lens. The first region includes a cylindrical lens, and then a divergence angle of the passed first light beam may be changed. The cylindrical lens may include but is not limited to a flat convex cylindrical lens, a flat concave cylindrical lens, a double-convex cylindrical lens, and a double-concave cylindrical lens. A type and a specific shape of the cylindrical lens are not limited in this application.

Further, optionally, the cylindrical lens includes a focal power in a first direction and a focal power in a second direction. The focal power in the first direction is used to implement convergence or divergence of the first light beam in the first direction, and the focal power in the second direction is used to implement convergence or divergence of the first light beam in the second direction. In view of this, the cylindrical lens may include a one-dimensional cylindrical lens or a two-dimensional cylindrical lens. The one-dimensional cylindrical lens is a cylindrical lens whose focal power in one of two dimensions (the first direction and the second direction) is 0 and whose focal power in the other dimension is not 0. In this application, a focal power in the second direction of the one-dimensional cylindrical lens is not 0. The two-dimensional cylindrical lens is a cylindrical lens whose focal power in the second direction is not 0 and whose focal power in the first direction is not 0. It may be understood that the second direction may be a vertical direction, and the first direction may be a horizontal direction.

The following shows examples of two possible structures of the optical shaping module.

Structure 1: The optical shaping module includes three first regions.

FIG. 5 is a diagram of a structure of an optical shaping module according to this application. For example, the optical shaping module includes a cylindrical lens array. For example, the cylindrical lens array includes nine cylindrical lenses, and the nine cylindrical lenses form three first regions: a first region A, a first region B, and a first region C. In this example, the plurality of cylindrical lenses that belong to the same first region have a same focal power. Specifically, the first region A includes three cylindrical lenses, and focal powers of the three cylindrical lenses are the same, and are all *ϕ*₁. The first region B includes three cylindrical lenses, and focal powers of the three cylindrical lenses are the same, and are all *ϕ*₂. The first region C includes three cylindrical lenses, and focal powers of the three cylindrical lenses are the same, and are all *ϕ*₃*.* It may be understood that a quantity of cylindrical lenses included in each first region may be the same or different. In FIG. 5, an example in which quantities of cylindrical lenses included in the first regions are the same is used. In addition, sizes of the cylindrical lenses included in the first region may be the same or different, and distances between the cylindrical lenses may be the same or different. This is not limited in this application.

Usually, a focal power of a lens included in a first region corresponding to the region of interest is less than a focal power of a lens included in a first region corresponding to the non-region of interest. For example, the first region B corresponds to the region of interest, and both the first region A and the first region C correspond to the non-region of interest. In this case, the focal power *ϕ*₂ is less than the focal power *ϕ*₁, and the focal power *ϕ*₂ is less than the focal power *ϕ*₃*.* By setting the focal power of the lens included in the first region corresponding to the region of interest to be less than the focal power of the lens included in the first region corresponding to the non-region of interest, a divergence angle of a second light beam obtained after the first light beam is converged or diverged through the first region corresponding to the region of interest of the detection apparatus may be relatively small, and a divergence angle of a second light beam obtained after the first light beam is converged or diverged through the first region corresponding to the non-region of interest of the detection apparatus may be relatively large. In this way, the second light beam obtained after passing through the first region corresponding to the non-region of interest of the detection apparatus may converge or diverge to the second light beam obtained after passing through the first region corresponding to the region of interest of the detection apparatus. This can increase an energy density of the second light beam corresponding to the region of interest. In this way, a light spot formed by the M second light beams in the first direction may be in a " 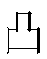 (a Chinese character that means convex)" shape or a " 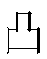 "-like shape.

The following describes different cases with reference to the light source module and the focal powers of the cylindrical lenses in the three first regions. The following provides descriptions by using an example in which the region of interest is a region corresponding to the central field of view of the detection apparatus, and the non-region of interest is a region corresponding to a field of view other than the central field of view in the full field of view range of the detection apparatus.

Case 1: The focal power *ϕ*1 is different from the focal power *ϕ*₂, and the focal power *ϕ*₁ is the same as the focal power *ϕ*₃*.*

It may also be understood as: In the three first regions included in the optical shaping module, the cylindrical lenses included in the first region A and the cylindrical lenses included in the first region C have the same focal power. Therefore, a capability of the first region A to converge or diverge the received first light beam is the same as a capability of the first region C to converge or diverge the received first light beam. The cylindrical lenses included in the first region A and the cylindrical lenses included in the first region B have different focal powers. Therefore, the capability of the first region A to converge or diverge the received first light beam is different from a capability of the first region B to converge or diverge the received first light beam. The cylindrical lenses included in the first region C and the cylindrical lenses included in the first region B have different focal powers. Therefore, the capability of the first region C to converge or diverge the received first light beam is different from the capability of the first region B to converge or diverge the received first light beam.

Based on a quantity of light source assemblies included in the light source module, there may be Case 1.1 and Case 1.2.

Case 1.1: The light source module includes a first light source assembly and a second light source assembly.

The first light source assembly is configured to emit a 1^{st} first light beam, and the second light source assembly is configured to emit a 2^{nd} first light beam. For descriptions of the first light source assembly and the second light source assembly, refer to the foregoing descriptions of the light source module. Details are not described herein again.

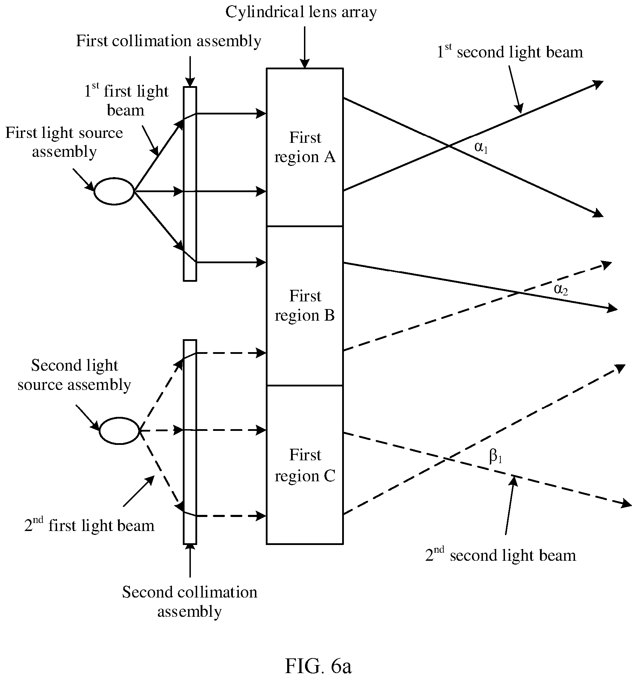

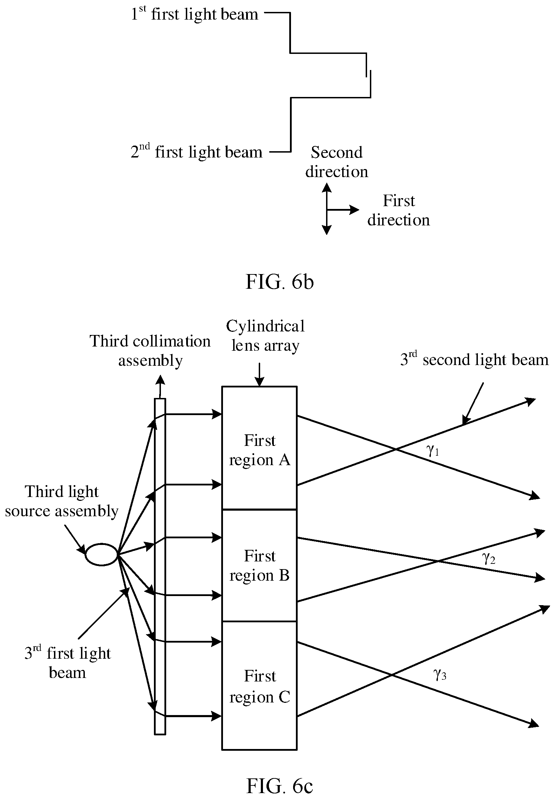

In a possible implementation, the optical shaping module includes a cylindrical lens array. For example, the cylindrical lens array forms three first regions: a first region A, a first region B, and a first region C. Further, the optical shaping module further includes a first collimation assembly and a second collimation assembly. The first collimation assembly and the second collimation assembly may be, for example, collimating lenses. After the 1^{st} first light beam emitted by the first light source assembly and the 2^{nd} first light beam emitted by the second light source assembly are propagated to the optical shaping module, the 1^{st} first light beam is collimated into parallel light through the first collimation assembly, and the 2^{nd} second light beam is also collimated into parallel light through the second collimation assembly. Because a focal power *ϕ*₁ of a cylindrical lens included in the first region A is different from a focal power *ϕ*₂ of a cylindrical lens included in the first region B, a capability of converging or diverging a received 1^{st} first light beam for the first region A is different from a capability of converging or diverging the 1^{st} first light beam for the first region B. In other words, a divergence angle (α₁) of a part that is of the 1^{st} first light beam and that passes through the first region A is different from a divergence angle (α₂) of a part that is of the 1^{st} first light beam and that passes through the first region B. Refer to FIG. 6a. The divergence angle α₁ is greater than the divergence angle α₂. In view of this, a light spot formed in the first direction by a 1^{st} second light beam obtained after the 1^{st} first light beam passes through the first region A and the first region B is stepped (or referred to as in a stair shape). Refer to FIG. 6b. Similarly, a divergence angle (α₂) of a part that is of the 2^{nd} first light beam and that passes through the first region B is different from a divergence angle (β₁) of a part that is of the 2^{nd} first light beam and that passes through the first region C. Refer to FIG. 6a. The divergence angle β₁ is greater than the divergence angle α₂. In view of this, a light spot formed by a 2^{nd} second light beam obtained after the 2^{nd} first light beam passes through the first region B and the first region C is also stepped (or referred to as in a stair shape). Refer to FIG. 6b. Further, the divergence angle obtained after the 1^{st} first light beam passes through the first region A is the same as the divergence angle obtained after the 2^{nd} first light beam passes through the first region C (α₁ = β₁).

It may also be understood as: After the 1^{st} first light beam and the 2^{nd} first light beam pass through the optical shaping module including the first region A, the first region B, and the first region C, obtained second light beams form (or splice) a light spot in a " 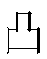 (a Chinese character that means convex)" shape or a " 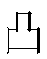 "-like shape, as shown in FIG. 6b.

To avoid that a target in a detection region cannot be continuously detected, that is, to avoid that the detection apparatus detects central part missing of a signal (or referred to as signal loss), two adjacent second light beams in the M second light beams partially overlap in the second direction. An overlapping angle may be greater than or equal to an angular resolution on a receiving side. The angular resolution on the receiving side is equal to a/f_{RX}, where a represents a size of a pixel, and f_{RX} represents a focal power of an optical receiving lens. For the pixel and the optical receiving lens, refer to the following related descriptions. Details are not described herein again. For example, the overlapping angle is 0.1°, 0.5°, or the like.

Case 1.2: The light source module includes a third light source assembly.

The third light source assembly is configured to emit a 3^{rd} first light beam. It may be understood that the third light source assembly may be the same as or different from the first light source assembly, or the third light source assembly may be the same as or different from the second light source assembly.

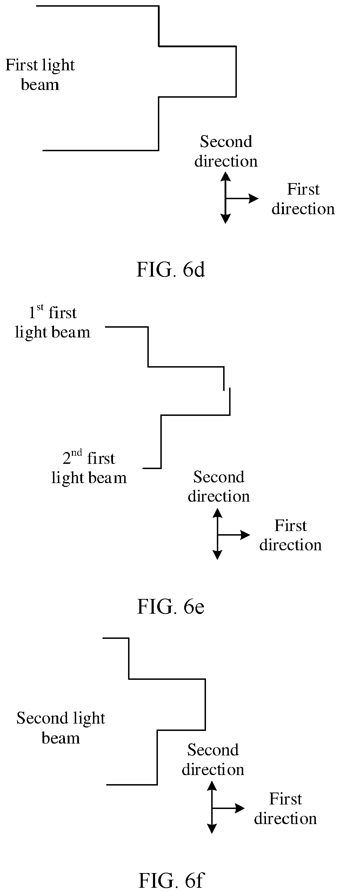

In a possible implementation, the optical shaping module may include a cylindrical lens array and a third collimation assembly. The cylindrical lens array is divided into (or forms) three first regions: a first region A, a first region B, and a first region C. The 3^{rd} first light beam emitted by the third light source assembly is collimated into parallel light through the third collimation assembly. A cylindrical lens in the first region A and a cylindrical lens in the first region B have different capabilities of converging or diverging the 3^{rd} first light beam, the cylindrical lens in the first region B and a cylindrical lens in the first region C also have different capabilities of converging or diverging the 3^{rd} first light beam, and the cylindrical lens in the first region A and the cylindrical lens in the first region C have the same capability of converging or diverging the 3^{rd} first light beam. Refer to FIG. 6c. A divergence angle (γ₁) of a part that is of the 3^{rd} first light beam and that passes through the first region A is different from a divergence angle (γ₂) of a part that is of the 3^{rd} first light beam and that passes through the first region B, the divergence angle (γ₂) of the part that is of the 3^{rd} first light beam and that passes through the first region B is different from a divergence angle (γ₃) of a part that is of the 3^{rd} first light beam and that passes through the first region C, and the divergence angle (γ₁) of the part that is of the 3^{rd} first light beam and that passes through the first region A is the same as the divergence angle (γ₃) of the part that is of the 3^{rd} first light beam and that passes through the first region C (that is, γ₁ = γ₃). In view of this, for a shape of a light spot formed in the first direction by a second light beam that is obtained after the first light beam passes through the optical shaping module, refer to FIG. 6d.

Case 2: The focal power *ϕ*₁, the focal power *ϕ*₂, and the focal power *ϕ*₃ are different from each other.

It may also be understood as: In the three first regions included in the optical shaping module, the cylindrical lens included in the first region A, the cylindrical lens included in the first region B, and the cylindrical lens included in the first region C have respective different focal powers. Therefore, the three first regions have respective different capabilities of converging or diverging the received first light beam. In other words, second light beams obtained after the first light beam passes through the three first regions have respective different divergence angles.

Based on a quantity of light source assemblies included in the light source module, there may be Case 2.1 and Case 2.2.

Case 2.1: The light source module includes a first light source assembly and a second light source assembly.

For descriptions of the first light source assembly and the second light source assembly, refer to the descriptions in Case 1.1. Details are not described herein again.

In a possible implementation, the optical shaping module includes a cylindrical lens array. For example, the cylindrical lens array forms three first regions: a first region A, a first region B, and a first region C. Further, the optical shaping module further includes a first collimation assembly and a second collimation assembly. After a 1^{st} first light beam emitted by the first light source assembly and a 2^{nd} first light beam emitted by the second light source assembly are propagated to the optical shaping module, the 1^{st} first light beam is collimated into parallel light through the first collimation assembly, and the 2^{nd} second light beam is also collimated into parallel light through the second collimation assembly. A focal power of a cylindrical lens included in the first region A, a focal power of a cylindrical lens included in the first region B, and a focal power of a cylindrical lens included in the first region C are different from each other. Therefore, the cylindrical lens included in the first region A and the cylindrical lens included in the first region B have different capabilities of converging or diverging the 1^{st} first light beam. In other words, a divergence angle (α₁) of a part that is of the 1^{st} first light beam and that passes through the first region A is different from a divergence angle (α₂) of a part that is of the 1^{st} first light beam and that passes through the first region B, a divergence angle (α₂) of a part that is of the 2^{nd} first light beam and that passes through the first region B is different from a divergence angle (β₁) of a part that is of the 2^{nd} first light beam and that passes through the first region C, and the divergence angle (α₁) of the part that is of the 1^{st} first light beam and that passes through the first region A is also different from the divergence angle (β₁) of the part that is of the 2^{nd} first light beam and that passes through the first region C. The optical path is similar to that in FIG. 6a, and a difference from FIG. 6a lies in that the divergence angle α₁ is different from the divergence angle β₁. In view of this, the 1^{st} first light beam is converged or diverged through the cylindrical lens included in the first region A and the cylindrical lens included in the first region B, to form a light spot that is stepped (or referred to as in a stair shape). Refer to FIG. 6e. Similarly, the cylindrical lens included in the first region B and the cylindrical lens included in the first region C have different capabilities of converging or diverging the 2^{nd} first light beam, and a light spot that is stepped (or referred to as in a stair shape) may be formed. Refer to FIG. 6e. In view of this, after the 1^{st} first light beam and the 2^{nd} first light beam are converged or diverged through the cylindrical lenses included in the first region A and the first region B, obtained second light beams may form a light spot in a " 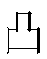 (a Chinese character that means convex)" shape or a " 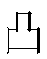 "-like shape in the first direction. Refer to FIG. 6e.

Case 2.2: The light source module includes a third light source assembly.

In a possible implementation, the third light source assembly is configured to emit a 3^{rd} first light beam. For descriptions of the third light source assembly, refer to the description of Case 1.2. Details are not described herein again.

In a possible implementation, the optical shaping module may include a cylindrical lens array and a third collimation assembly. The cylindrical lens array forms a first region A, a first region B, and a first region C. The 3^{rd} first light beam emitted by the third light source assembly is collimated into parallel light through the third collimation assembly. A cylindrical lens included in the first region A, a cylindrical lens included in the first region B, and a cylindrical lens included in the first region C have different capabilities of converging or diverging the 3^{rd} first light beam. Therefore, a divergence angle (γ₁) of a part that is of the 3^{rd} first light beam and that passes through the first region A is different from a divergence angle (γ₂) of a part that is of the 3^{rd} first light beam and that passes through the first region B, the divergence angle (γ₂) of the part that is of the 3^{rd} first light beam and that passes through the first region B is different from a divergence angle (γ₃) of a part that is of the 3^{rd} first light beam and that passes through the first region C, and the divergence angle (γ₁) of the part that is of the 3^{rd} first light beam and that passes through the first region A is different from the divergence angle (γ₃) of the part that is of the 3^{rd} first light beam and that passes through the first region C. A specific optical path is similar to that in FIG. 6c, and a difference from that in FIG. 6c lies in that the divergence angle γ1 is different from the divergence angle γ3. In view of this, a shape of a light spot formed by the obtained second light beam in the first direction is shown in FIG. 6f.

Structure 2: The optical shaping module includes two first regions.

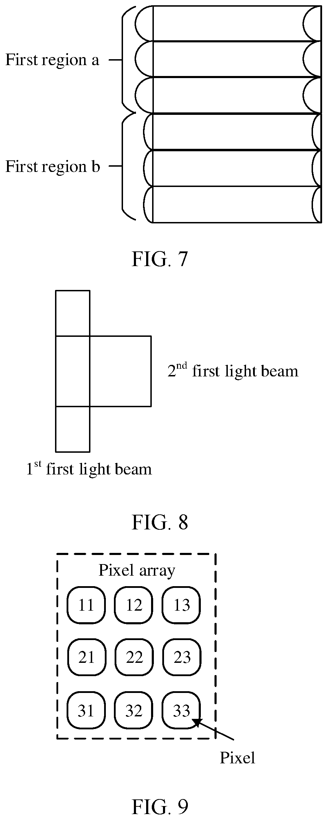

FIG. 7 is a diagram of a structure of another optical shaping module according to this application. The optical shaping module includes a cylindrical lens array. For example, the cylindrical lens array includes six cylindrical lenses. For example, the six cylindrical lenses form two first regions: a first region a and a first region b. A focal power Φ₁ of the cylindrical lens in the first region a is different from a focal power Φ₂ of the cylindrical lens in the first region b. Further, the first light beam is converged or diverged through the first region a, and then detection (or illumination) of a relatively large field of view can be implemented. The first light beam is converged or diverged through the first region b, and then detection (or illumination) of a relatively small field of view can be implemented. In addition, the relatively small field of view falls within a range of the relatively large field of view. For example, the relatively small field of view may be a field of view corresponding to the region of interest of the detection apparatus. It may also be understood as: The first light beam is converged or diverged through the optical shaping module, and then a central region of a second light spot can overlap a first light spot. The first light spot and the second light spot are light spots formed by different second light beams in two second light beams obtained through the optical shaping module. The central region of the second light spot is larger than or equal to the region of interest of the detection apparatus, and the first light spot may also cover the region of interest of the detection apparatus.

Further, the light source module may include a first light source assembly and a second light source assembly. The first light source assembly is configured to emit a 1^{st} first light beam, and the second light source assembly is configured to emit a 2^{nd} first light beam. A field of view at which the 1^{st} first light beam that is converged or diverged through the first region a of the optical shaping module is emitted to the detection region is a field of view A, and a field of view at which the 2^{nd} first light beam that is converged or diverged through the first region b of the optical shaping module is emitted to the detection region is a field of view B, where the field of view A is greater than the field of view B. For example, the field of view A is 25°, the field of view B is 8°. For a second light beam obtained through convergence or divergence through the first region a of the optical shaping module, an energy density (or intensity) is lower, and a detectable (or illuminable) distance is shorter. For a second light beam obtained after passing through the first region b of the optical shaping module, an energy density (or intensity) is higher, and a detectable (or illuminable) distance is longer, so that detection (or illumination) at a relatively long distance can be implemented. For a shape of a light spot formed in the first direction by second light beams obtained by converging or diverging the 1^{st} first light beam and the 2^{nd} first light beam through the optical shaping module, refer to FIG. 8.

Further, optionally, a central field of view of the field of view A overlaps the field of view B, so that the central region of the second light spot overlaps the first light spot. For example, the field of view B may correspond to the region of interest of the detection apparatus, the central field of view of the field of view A also corresponds to the region of interest of the detection apparatus, and the field of view A is the same as a full field of view of the detection apparatus.

In a possible implementation, the detection apparatus may further include a detection module and an optical receiving lens. The following separately describes the detection module and the optical receiving lens.

### 3. Detection module

In a possible implementation, the detection module is configured to perform optical-to-electrical conversion on M third light beams obtained by reflecting the M second light beams by the target in the detection region, to obtain an electrical signal used to determine association information of the target. The association information of the target may include but is not limited to distance information of the target, an orientation of the target, a speed of the target, grayscale information of the target, and/or the like.

For example, the detection module may be, for example, a photoelectric detector (photoelectric detector, PD), a p-type semiconductor/intrinsic/n-type semiconductor (positive intrinsic negative, PIN) photoelectric diode (also referred to as a PIN junction diode), an avalanche photodiode (avalanche photodiode, APD), a single-photon avalanche diode (single-photon avalanche diode, SPAD) array, a silicon photomultiplier (silicon photomultiplier, SiMP) array, or the like.

FIG. 9 is a diagram of a structure of a detection module according to this application. A 5×5 pixel array is used as an example of the detection module, where pixels in the pixel array may be one or more SPADs, SiMPs, or the like. The pixel array may be gated by row based on time, or may be gated by column based on time, or may be gated all at a time. Gating by row based on time means that at least one row in a pixel array is gated at a same moment. Gating by column based on time means that at least one column in a pixel array is gated at a same moment. It may be understood that the foregoing provided shape of the pixel is merely an example, and this is not limited in this application. For example, the shape of the pixel may alternatively be a square, an ellipse, or another possible shape.

It should be noted that the pixel array provided in FIG. 9 is merely an example, and quantities of rows and columns included in the pixel array are not limited in this application. For example, the pixel array may alternatively be a pixel array with one row and a plurality of columns, or a pixel array with a plurality of rows and one column, or another pixel array with a plurality of rows and a plurality of columns. Details are not listed herein one by one.

With reference to the light source array in FIG. 4, for example, one row is gated at a same moment. A first row in the pixel array is gated and a first row in the light source array is gated at a first moment, a second row in the pixel array is gated and a second row in the light source array is gated at a second moment, a third row in the pixel array is gated and a third row in the light source array is gated at a third moment, and so on. For example, one column in the pixel array is gated at a same moment. A first column in the pixel array is gated and a first column in the light source array is gated at a first moment, a second column in the pixel array is gated and a second column in the light source array is gated at a second moment, a third column in the pixel array is gated and a third column in the light source array is gated at a third moment, and so on.

### 4. Optical receiving lens

In a possible implementation, the optical receiving lens includes at least one lens. The lens may be, for example, a spherical lens (for example, a concave lens or a convex lens), or may be an aspheric lens. A combination of a plurality of spherical lenses and/or aspheric lenses is used as the optical receiving lens. This helps improve imaging quality of the detection apparatus and reduce aberration of an optical imaging system. It should be understood that the convex lens and the concave lens are of a plurality of different types. For example, the convex lens includes a double convex lens, a flat convex lens, and a concave convex lens, and the concave lens includes a double concave lens, a flat concave lens, and a concave convex lens. Types of the convex lens and the concave lens are not limited in this application.

Further, optionally, a material of a lens in the optical receiving lens may be an optical material like glass, resin, or crystal. When the material of the lens is resin, this helps reduce the mass of the detection apparatus. When the material of the lens is glass, this helps further improve imaging quality of the detection apparatus. Further, to effectively suppress temperature drift, the optical receiving lens includes at least one lens made of the glass.

It may be understood that, the detection module and the optical receiving lens may also be collectively referred to as a receiving module.

It should be noted that the detection apparatus in this application may further include another possible module, for example, a processing module. The processing module is configured to determine the association information of the target based on the electrical signal from the detection module. Further, the determined association information of the target may be used to plan a traveling path, for example, avoid an obstacle on the traveling path, and implement self-driving of the vehicle.

For example, the processing module may be or include one or more processing units. The processing unit may be a circuit that has a signal (or data) processing capability. In an implementation, the processing unit may be a circuit that has an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processing unit may implement a specific function by using a logical relationship of a hardware circuit. The logical relationship of the hardware circuit is fixed or reconfigurable. For example, the processor is an application-specific integrated circuit (application-specific integrated circuit, ASIC) or a hardware circuit, for example, a field-programmable gate array (field-programmable gate array, FPGA), implemented by a programmable logic device (programmable logic device, PLD). In the reconfigurable hardware circuit, a process in which the processor loads a configuration document to implement hardware circuit configuration may be understood as a process in which the processor loads instructions to implement the functions of some or all of the units. Different processing units may be independent components, or may be integrated into one or more processors.

Based on the foregoing content, the following provides four specific implementations of the foregoing detection apparatus with reference to specific hardware structures, to further understand the structure of the detection apparatus. It should be noted that, in the foregoing modules, if there is no special description or logical conflict, other possible detection apparatuses may be formed through combination according to an internal logical relationship of the modules. Four detection apparatuses provided below are merely examples.

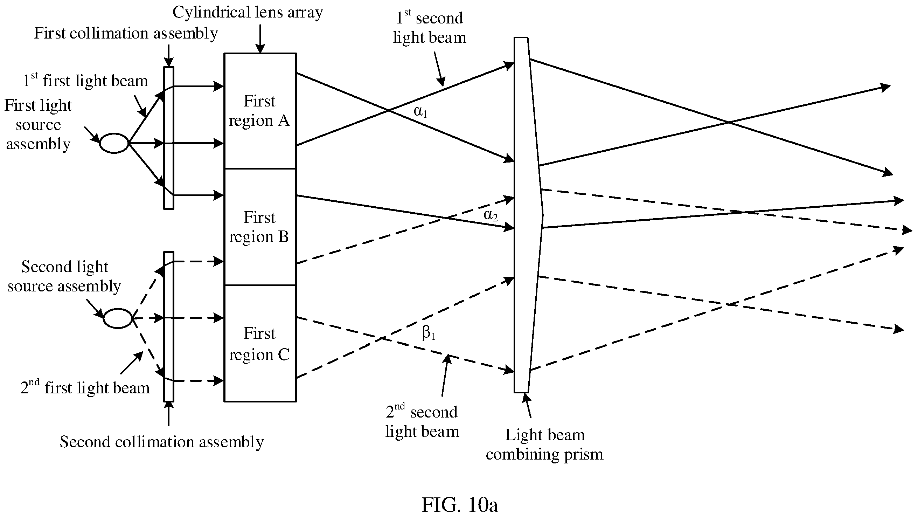

FIG. 10a is a diagram of a structure of another detection apparatus according to this application. The detection apparatus includes a light source module and an optical shaping module. In this example, the light source module includes a first light source assembly and a second light source assembly. The first light source assembly is configured to emit a 1^{st} first light beam, and the second light source assembly is configured to emit a 2^{nd} first light beam. For example, the optical finishing module includes a cylindrical lens array, a first collimation assembly, a second collimation assembly, and a light beam combining prism. The first collimation assembly is configured to collimate the 1^{st} first light beam emitted by the first light source assembly into parallel light. The second collimation assembly is configured to collimate the 2^{nd} first light beam emitted by the second light source assembly into parallel light. The cylindrical lens array shown in FIG. 5 is used as an example of the cylindrical lens array included in the optical shaping module. For details, refer to the foregoing related descriptions. Details are not described herein again. The parallel 1^{st} first light beam is converged or diverged through the cylindrical lens array to obtain 1^{st} second light beams, where a divergence angle of a 1^{st} second light beam obtained after a part of the 1^{st} first light beam passes through a first region A is α₁, and a divergence angle of a 1^{st} second light beam obtained after a part of the 1^{st} first light beam passes through a first region B is α₂. The 2^{nd} first light beam is converged or diverged through the cylindrical lens array to obtain 2^{nd} second light beams, where a divergence angle of a 2^{nd} second light beam obtained after a part of the 2^{nd} first light beam passes through the first region B is α₂, and a divergence angle of a 2^{nd} first light beam obtained after a part of the 2^{nd} first light beam passes through a first region C is β₁. The 1^{st} second light beams and the 2^{nd} second light beams are further converged through the light beam combining prism, and the 1^{st} second light beams and the 2^{nd} second light beams that are further converged are emitted to a detection region, where the 1^{st} second light beams and the 2^{nd} second light beams that are further converged form a light spot in a " 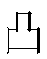 (a Chinese character that means convex)" shape or a " 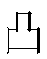 "-like shape in a first direction. It may be understood that, the detection apparatus may further include a detection module, a processing module, and the like. For details, refer to the foregoing related descriptions. Details are not described herein again.

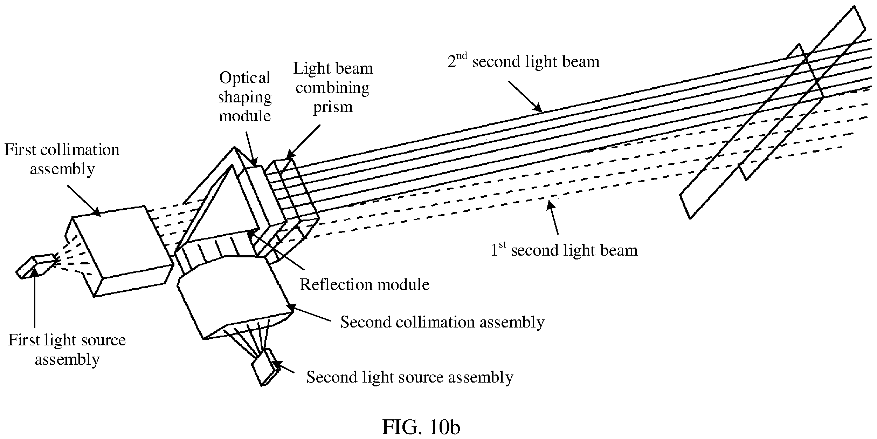

FIG. 10b is a diagram of a structure of another detection apparatus according to this application. A difference between the detection apparatus and that in FIG. 10a lies in that a propagation direction of a 1^{st} first light beam emitted by a first light source assembly is inconsistent with a propagation direction of a 2^{nd} first light beam emitted by a second light source assembly. In view of this, the detection apparatus may further include a reflection module. For example, on an optical path on which the 2^{nd} first light beam emitted by the second light source assembly is located, the reflection module is further included (where a propagation optical path of the 2^{nd} first light beam may also be referred to as a side-pass optical path). A propagation optical path of the 1^{st} first light beam is as follows: The 1^{st} first light beam emitted by the first light source assembly is collimated into parallel light through a first collimation assembly, and then propagated to a cylindrical lens array. After the parallel light is converged or diverged (or shaped) through the cylindrical lens array, a 1^{st} second light beam is obtained. A propagation optical path of the 2^{nd} first light beam is: The 2^{nd} first light beam emitted by the second light source assembly is collimated into parallel light through a second collimation assembly, and then propagated to the reflection module, where a propagation direction of the 2^{nd} first light beam reflected by the reflection module is consistent with the propagation direction of the 1^{st} first light beam. Then, the 2^{nd} first light beam after the reflection is propagated to the cylindrical lens array. After the 2^{nd} first light beam after the reflection is converged or diverged through the cylindrical lens array, a 2^{nd} second light beam is obtained. The 1^{st} second light beam and the 2^{nd} second light beam that are converged through a light beam combining prism are emitted to a detection region, to form a light spot in a " 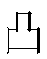 (a Chinese character that means convex)" shape or a " 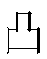 "-like shape in a first direction.

In a possible implementation, the reflection module may be, for example, a planar mirror, or may be a reflecting prism, for example, a right-angle reflecting prism (as shown in FIG. 10b). The right-angle reflecting prism utilizes total reflection of two reflective surfaces. Because the reflecting prism has the same material, using the reflecting prism as the reflection module does not change a difference between a divergence angle and a pointing angle of the second light beam due to a CTE difference of materials. This helps further improve thermal stability of the detection apparatus.

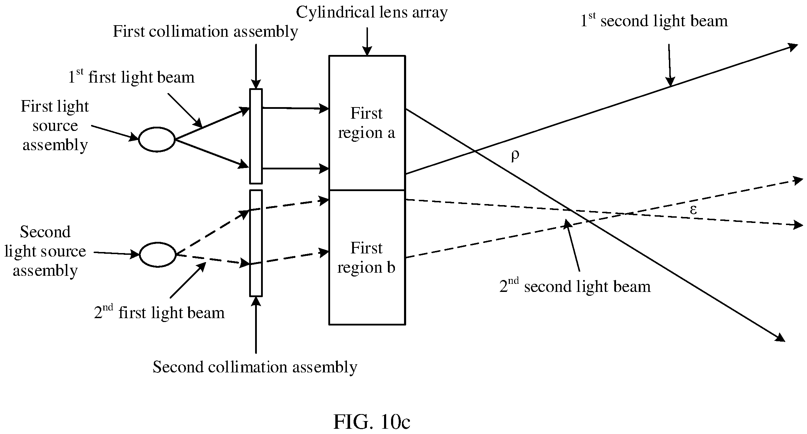

FIG. 10c is a diagram of a structure of another detection apparatus according to this application. The detection apparatus includes a light source module and an optical shaping module. Further, the optical shaping module may further include a first collimation assembly and a second collimation assembly. For the light source module, the first collimation assembly, and the second collimation, refer to the foregoing descriptions of FIG. 10a. Details are not described herein again. The cylindrical lens array shown in FIG. 7 is used as an example of a cylindrical lens array included in the optical shaping module. A 1^{st} first light beam is converged or diverged through the cylindrical lens array to obtain a 1^{st} second light beam, and a 2^{nd} first light beam is converged or diverged through the cylindrical lens array to obtain a 2^{nd} second light beam. A divergence angle of the 1^{st} second light beam obtained after the 1^{st} first light beam passes through a first region a is ρ, and a divergence angle of the 2^{nd} second light beam obtained after the 2^{nd} first light beam passes through a first region b is ε, for implementing two second light beams with different divergence angles. The 1^{st} second light beam and the 2^{nd} second light beam are converged through a light beam combining prism, and the 1^{st} second light beam and the 2^{nd} second light beam that are converged are emitted to a detection region. The 1^{st} second light beam that is converged may cover a full field of view range of the detection apparatus, and the 2^{nd} second light beam may cover a central field of view of the detection apparatus. In view of this, the 1^{st} second light beam and the 2^{nd} second light beam form a light spot in a " 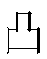 (a Chinese character that means convex)" shape or a " 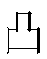 "-like shape in a first direction.

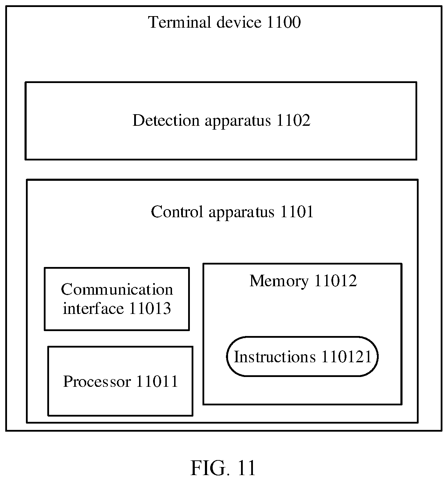

Based on the foregoing described architecture and function principles of the detection apparatus, this application may further provide a terminal device. FIG. 11 is a diagram of a structure of a terminal device according to this application. A terminal device 1100 may include a control apparatus 1101 and the detection apparatus 1102 in any one of the foregoing embodiments. The control apparatus 1101 may determine association information of a target based on M third light beams obtained by reflecting M second light beams by the target. Alternatively, the control apparatus 1101 may plan a traveling path or the like based on association information that is of a target and that is sent by the detection apparatus 1102, for example, avoid an obstacle on the traveling path.

The detection apparatus 1102 may be, for example, a lidar, and may sense a target in a surrounding environment of the terminal device by using the M second light beams. In some embodiments, in addition to sensing the target, the lidar may be further configured to sense a speed and/or a moving direction of the target. The detection apparatus 1102 may be the detection apparatus in any one of the foregoing embodiments. For details, refer to the foregoing related descriptions. Details are not described herein again.

Some or all functions of the terminal device 1100 are controlled by the control apparatus 1101. The control apparatus 1101 may include at least one processor 11011. The processor 11011 executes instructions 110121 stored in a non-transitory computer-readable medium like a memory 11012. Further, the terminal device may include a communication interface 11013. For example, the communication interface 11013 may be configured to receive the association information of the target from the detection apparatus 1102. Alternatively, the control apparatus 1101 may be a plurality of computing devices that control individual components or subsystems of the terminal device 1100 in a distributed manner.

For example, the processor 11011 may include one or more processing units. For the processing unit, refer to the descriptions of the processing unit in the foregoing processing module. Details are not described herein again. Although FIG. 11 functionally illustrates the processor, the memory, the communication interface, and other elements of the control apparatus 1101 in a same block, a person of ordinary skill in the art should understand that the processor and the memory may actually include a plurality of processors or memories that may not be stored in a same physical housing. For example, the memory may be a hard disk drive or another storage medium located in a housing different from that of the control apparatus 1101. For another example, the processor may alternatively be far away from the vehicle and perform wireless communication with the vehicle.

It should be noted that, if the detection apparatus does not include a processing module, the foregoing functions related to the processing module may be performed by the processor 11011, or may be performed by another apparatus that has a processing capability in the terminal device. If the detection apparatus includes a processing module, all the functions of the processing module may be performed by the processing module, or some of the functions may be performed by the processing module, and some of the functions may be performed by the processor 11011 in the terminal device, or all the functions may be performed by the processor 11011. This is not limited in this application.

In some embodiments, the memory 11012 may include the instructions 110121 (for example, program logic), and the instructions 110121 may be read by the processor 11011 to perform various functions of the terminal device 1100, including the functions described above. The memory 11012 may also include additional instructions, including instructions used to send data to, receive data from, interact with, and/or control another system (for example, a propulsion system) of the terminal device. In addition to the instructions 110121, the memory 11012 may further store data, such as data detected by the detection apparatus 1102, a location, a direction, and a speed of the vehicle, and other information.

For example, the memory may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium.

It should be noted that, a functional framework of the terminal device provided in FIG. 11 is merely an example. In another example, the terminal device 1100 may include more, fewer, or different apparatuses, and each apparatus may include more, fewer, or different components. In addition, the shown apparatus and structure may be combined or divided in any manner. This is not specifically limited in this application.

For example, the terminal device may be a transportation means. The transportation means may be, for example, a vehicle (for example, an unmanned vehicle, an intelligent vehicle, an electric vehicle, or a digital vehicle), a ship, a robot, a surveying and mapping device, an uncrewed aerial vehicle, a smart home device (for example, a robot vacuum), an intelligent manufacturing device (for example, an industrial device), an intelligent transportation device (for example, an AGV, an unmanned transport vehicle, or a truck), or the like.

In embodiments of this application, if there is no special description or logic conflict, terms and/or descriptions in different embodiments are consistent and may be mutually referenced. Technical features in different embodiments may be combined to form a new embodiment based on an internal logical relationship between the technical features.

In this application, "uniformity" does not mean absolute uniformity, and an engineering error may be allowed. "Vertical" does not mean absolute verticality, and a specific engineering error may be allowed. "At least one" means one or more, and "a plurality of" means two or more. The term "and/or" describes an association relationship between associated objects and may indicate three relationships. For example, A and/or B may indicate the following cases: Only A exists, both A and B exist, and only B exists, where A and B may be singular or plural. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural. In the text descriptions of this application, the character "/" usually indicates an "or" relationship between the associated objects. In a formula of this application, the character "/" indicates a "division" relationship between the associated objects. In addition, in this application, the term "for example" is used to represent giving an example, an illustration, or a description. Any embodiment or design solution described as an "example" in this application should not be explained as being more preferred or having more advantages than another embodiment or design solution. Alternatively, it may be understood as that the word "example" is used to present a concept in a specific manner, and does not constitute a limitation on this application.

It may be understood that various numbers in this application are merely used for differentiation for ease of description, and are not used to limit the scope of embodiments of this application. Sequence numbers of the foregoing processes do not mean execution sequences. The execution sequences of the processes should be determined according to functions and internal logic of the processes. The terms "first", "second", and the like are used to distinguish between similar objects without having to describe a specific order or sequence. In addition, terms "including" and "having" and any variants thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A detection apparatus, comprising a light source module and an optical shaping module, wherein the optical shaping module comprises M first regions, and M is an integer greater than 1;
the light source module is configured to emit a first light beam; and
the M first regions of the optical shaping module are configured to converge or diverge the received first light beam, to obtain M second light beams, at least two first regions in the M first regions have different capabilities of converging or diverging the first light beam, and a light spot formed by the M second light beams comprises at least two regions with different intensities.

2. The apparatus according to claim 1, wherein the light spot formed by the M second light beams comprises a second region and a third region that have different intensities, an intensity of the second region is greater than an intensity of the third region, the second region corresponds to a region of interest of the detection apparatus, and the third region corresponds to a non-region of interest of the detection apparatus.

3. The apparatus according to claim 2, wherein the region of interest is a region corresponding to a central field of view of the detection apparatus, and the non-region of interest is a region corresponding to a field of view other than the central field of view in a full field of view range of the detection apparatus.

4. The apparatus according to claim 2 or 3, wherein the non-region of interest is a region corresponding to an edge field of view of the detection apparatus.

5. The apparatus according to any one of claims 1 to 4, wherein the optical shaping module comprises a lens array, the lens array forms the M first regions, and each first region comprises at least one lens; and
lenses comprised in the at least two first regions that have different capabilities of converging or diverging the first light beam have different focal powers.

6. The apparatus according to claim 5, wherein a plurality of lenses comprised in any one of the M first regions have a same focal power.

7. The apparatus according to any one of claims 2 to 6, wherein a focal power of a lens comprised in a first region corresponding to the region of interest is less than a focal power of a lens comprised in a first region corresponding to the non-region of interest.

8. The apparatus according to any one of claims 1 to 7, wherein the light spot formed by the M second light beams is stepped.

9. The apparatus according to any one of claims 1 to 8, wherein the light spot formed by the M second light beams is in a " 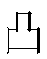 (a Chinese character that means convex)" shape or a " 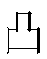 "-like shape.

10. The apparatus according to any one of claims 1 to 9, wherein two adjacent second light beams in the M second light beams partially overlap.

11. The apparatus according to any one of claims 2 to 9, wherein a central region of a second light spot overlaps a first light spot, the central region of the second light spot is larger than or equal to the region of interest, and the first light spot and the second light spot are light spots formed by different second light beams in the M second light beams.

12. The apparatus according to claim 11, wherein the second light spot corresponds to the full field of view range of the detection apparatus.

13. The apparatus according to any one of claims 5 to 12, wherein the lens comprises a cylindrical lens or a spherical lens.

14. The apparatus according to any one of claims 1 to 13, wherein the light source module comprises N light source assemblies, one light source assembly corresponds to one first light beam, and N is a positive integer.

15. The apparatus according to claim 14, wherein the N light source assemblies comprise a first light source assembly and a second light source assembly, and the detection apparatus further comprises a reflection module, wherein
the first light source assembly is configured to emit a 1^{st} first light beam;
the second light source assembly is configured to emit a 2^{nd} first light beam; and
the reflection module is configured to change a propagation direction of the 2^{nd} first light beam, wherein a changed propagation direction of the 2^{nd} first light beam is the same as a propagation direction of the 1^{st} light beam.

16. The apparatus according to any one of claims 1 to 15, wherein the detection apparatus further comprises an optical receiving lens; and
the optical receiving lens is configured to receive M third light beams, wherein the third light beam is an echo signal obtained after the second light beam is reflected by a target in a detection region.

17. The apparatus according to claim 16, wherein the detection apparatus further comprises a detection module; and
the detection module is configured to determine association information of the target based on the M third light beams from the optical receiving lens.

18. A terminal device, comprising a control apparatus and the detection apparatus according to any one of claims 1 to 17, wherein
the control apparatus is configured to control the detection apparatus to detect the detection region.
